# EUROPEAN PATENT SPECIFICATION

(11) **EP 0 306 007 B1**
(45) Date of publication and mention of the grant of the patent: **16.02.1994**
(21) Application number: 88114219.4
(22) Date of filing: 31.08.1988
(51) Int. Cl.: B01D 19/04

(54) **Solid silicone defoaming agent**
Festes Silicon-Antischaummittel
Antimousse de silicone solide

(30) Priority: 31.08.1987 JP 215494/87
(43) Date of publication of application: 08.03.1989
(73) Proprietor: DOW CORNING KABUSHIKI KAISHA, Ashigarakami-gun Kanagawa 258-01 (JP)
(72) Inventor: Hirofumi, Shimizu, Odaware-shi, Kanagawa Prefecture (JP); Ken, Morishita, Suita-shi, Osaka Prefecture (JP)
(74) Representative: Spott, Gottfried, Dr.

(56) References cited:
- EP-A- 0 037 951
- DE-A- 2 141 905
- DE-A- 2 625 706
- DE-A- 2 625 707
- DE-C- 1 067 003
- GB-A- 1 101 627
- US-A- 3 652 453
- PATENT ABSTRACTS OF JAPAN vol. 9, no. 88 (C-276) (1811), 17th April 1985; & JP-A-59 222 209 (SHINETSU KAGAKU KOGYO K.K.) 13.12.1984

## Description

### Detailed Explanation of the Invention

### Field of the Invention

The present invention relates to & solid silicone defoaming agent.

### Prior Art

Silicone defoaming agents are widely used in the art for defoaming and foam suppression service due to their numerous advantages: their addition in small quantities to an aqueous or nonaqueous foaming system has a remarkable defoaming effect, they are chemically inert and also colorless, transparent, and odorless, and they do not have adverse effects.

In concrete terms, foam inhibition or destruction is achieved in nonaqueous foaming systems mainly by the use of a defoaming agent comprising a dimethylpolysiloxane oil (silicone oil) as such or a defoaming agent comprising a silicone oil compound in which microparticulate silica is dispersed in such a dimethylpolysiloxane oil. On the other hand, for defoaming or foam inhibition in aqueous foaming systems, use is made of an emulsion-type defoaming agent in which the above silicone oil compound has been emulsified using a suitable emulsifying agent or emulsifying assistant.

EP-A-0 037 951 discloses a defoamant agent which comprises a dispersion of a silica filler in organopolysiloxane and a water-soluble compound which may be for example a low molecular weight polyalkylene glycol. To obtain an emulsion it is necessary to homogenise the mixture by a colloid mill or another homogenizer using high shear.

Moreover, it is known from GB-A-1 101 627 to produce a defoamant composition which comprises a water-insoluble emulsifying agent, a liquid organopolysiloxane and a water-insoluble wax having a melting point above 80°C. These components have to be mixed in a mixing apparatus capable of imparting a high shear to the mixture.

However, the prior emulsion-type defoaming agents used for aqueous foaming systems suffer from the following problems.
(1) Poor emulsion stability, resulting in destruction of the emulsion and separation of the silicone oil compound due to temperature changes, shaking during transport, etc., or simply in long-term storage.
(2) Decomposition and the appearance of mold when a suitable preservative or antimold is not added.
(3) The defoaming agent is a liquid, so addition to the foaming system necessitates a dosing pump, etc., or manual intervention.

The solid silicone defoaming agent obtained by melting a water-soluble wax together with organopolysiloxane (effective component of the defoaming agent) followed by solidification by cooling has been proposed as a material which would solve the above problems.

### Problems to Be Solved by the Invention

However, considering this prior solid silicone defoaming agent further, one notes that the miscibility of the organopolysiloxane with the water-soluble wax is poor, which causes the appearance of a heterogeneous phase upon solidification from the melt during production. Due to this heterogeneous phase, the solid defoaming agent will not satisfactorily disperse in water when it is applied, and part remains undissolved.

One would think that this problem could be resolved by the addition of an emulsifying agent. However, the defoaming effect is significantly weakened when a large quantity of hydrophilic emulsifying agent is added. Another problem is encountered when a lipophilic emulsifying agent is added: the organopolysiloxane effective component becomes less dispersible in water, with the result that a satisfactory defoaming effect is not realized.

JP-A-84222209 discloses a solid defoaming agent which uses a polyoxyethylene group-containing water-soluble wax in a silicone oil compound. However, while the dispersibility of the silicone oil compound in water is improved with this solid defoaming agent, this property nevertheless remains unsatisfactory. Furthermore, a high-shear dispersion device is required in the preparation of this solid defoaming agent in order to obtain a homogeneous composition. An additional drawback is that a quenching process is also required.

### Object of the Invention

The object of the present invention is to solve the above problems by providing a solid silicone defoaming agent which has an excellent dispersibility, particularly in water, which has a powerful defoaming activity, and which is easily produced.

### Means Solving the Problems

Said object of the present invention is achieved by means of a solid silicone defoaming agent which characteristically comprises
(A) 5 to 60 weight parts self-emulsifying defoaming agent compound and
(B) 95 to 40 weight parts wax;
   wherein said self-emulsifying defoaming agent compound (A) consists of
   at least 5 weight% silicone oil compound comprising (a) silicone oil having a viscosity of at least 20 mm²/s at 25 degrees Centigrade and (b) microparticulate silica,
(c) at least 30 weight% polyoxypropylene or polyoxypropylene/polyoxyethylene glycols having a molecular weight of 500 to 6000 kg/kmol and/or polyoxyalkylene/polysiloxane copolymer, and
(d) zero to 30 weight% optionally added liquid, water-soluble surfactant other than said (c);
   wherein said wax (B) consists of
   (i) wax which does not disperse or dissolve in water at room temperature and which has a melting point of at least 35 degrees Centigrade,
      and/or
   (ii) wax which dissolves or disperses in water at room temperature and which has a melting point of at least 30 degrees Centigrade;
      and wherein the wax (i) comprises no more than 60 weight% of the overall defoaming agent.

### Effects

The solid silicone defoaming agent of the present invention is prepared by melting a specific water-insoluble wax and/or water-soluble wax, dispersing into this a specific self-emulsifying defoaming agent compound, and solidifying this mixture by cooling. Due to the high dispersibility of the defoaming agent compound in this wax melt, a solid defoaming agent, which has a uniform composition in which the defoaming agent compound and wax are satisfactorily dispersed to homogeneity, is obtained without the use in the mixing stage of a high-shear emulsifying device, e.g., a homomixer or colloid mill, and without the application in the cooling/solidification process of a quench or temperature control for the purpose of preventing separation or aggregation of the defoaming agent compound. When this solid silicone defoaming agent is added to a aqueous foaming system, the defoaming agent compound becomes homogeneously dispersed in the foaming system due to the activity of the wax. A heterogeneous phase will not appear, which makes possible the stable generation of a superior defoaming effect.

The present invention will be explained in concrete terms in the following.

The solid silicone defoaming agent of the present invention essentially consists of a self-emulsifying defoaming agent compound (A) and wax (B).

The self-emulsifying defoaming agent compound (A) is itself composed of a silicone oil compound, a (c) polyoxyalkylene and/or polyoxyalkylene/polysiloxane copolymer having a molecular weight of 500-6000 kg/kmol, and optionally a (d) liquid, water-soluble surfactant. It is this component which is the active component of the solid silicone defoaming agent of the present invention. This self-emulsifying defoaming agent compound has the ability to form an oil-in-water emulsion when stirred into water.

Furthermore, the silicone oil compound constituent of the self-emulsifying defoaming agent compound (A) consists of (a) silicone oil composed of polydimethylsiloxane with a viscosity of at least 20 mm²/s at 25 degrees Centigrade and (b) microparticulate silica. The defoaming agent compound must contain at least 5 weight% of this silicone oil compound. It is preferred that the proportions of silicone oil (a) and microparticulate silica (b) fall within the range of, for example, 80-99.5:0.5-20(weight).

The polydimethylsiloxane under consideration comprises the various known polydimethylsiloxanes. These are produced, for example, by the hydrolysis of dimethyldihalosilane followed by condensation, or by the decomposition of dimethylcyclosiloxane followed by condensation. The terminals of this polydimethylsiloxane will generally be blocked by the trimethylsilyl group or hydroxyl group, but are not limited to this.

The viscosity of this polydimethylsiloxane must be at least 20 mm²/s at 25 degrees Centigrade in order to obtain the required defoaming activity. However, no restriction is placed on the upper limit for the viscosity, and it can be 1,000,000 mm²/s or higher at 25 degrees Centigrade.

A preferred microparticulate silica, which together with the above silicone oil comprises the compound, is prepared by replacing the water in a silica hydrogel with a low-boiling organic solvent (for example, ethanol) and removing the organic solvent by heating the gel to around the critical temperature of the organic solvent. In this manner one avoids excessive shrinkage or collapse of the silica's cellular structure. However, commercially available microparticulate silicas can be used in the present invention as acquired. Other silicas can also be used, for example, precipitated silica, silica xerogel, fumed silica, and these silicas having surface organosilyl groups.

The silicone oil compound under consideration can contain up to 10 weight% siloxane resin essentially composed of (CH₃)₃SiO₁_{/}₂ units and SiO₂ units, which serves to give a defoaming agent having an even better defoaming activity. While this siloxane resin can be any known type, it will typically be prepared by the cohydrolysis and condensation of (CH₃)₃SiCl and SiCl₄ or by the reaction of (CH₃)₃SiCl with acidic silica sol. Mineral oil can optionally be blended into the silicone oil compound.

The polyoxyalkylene and/or polyoxyalkylene/polysiloxane copolymer (c) functions to impart water dispersibility to the silicone oil compound or to improve this water dispersibility. Along with this component (c), a liquid, water soluble surfactant (d) other than component (c) can optionally be present.

Polyoxyalkylene and/or polyoxyalkylene/polysiloxane copolymer are used as component (c).

The polyoxyalkylene under consideration consists of polyoxypropylene polymers or polyoxypropylene/polyoxyethylene copolymers. Liquid polymers of this type are commercially available, and these consist of polymer having CH₂CH(CH₃)O units and possibly CH₂CH₂O units with terminals of, for example, the methyl group, the ethyl group, the propyl group, or the hydroxyl group. These types of polyoxyalkylenes are known as "polypropylene glycols" and "polypropylene-polyethylene glycols", having a molecular weight of 500 to 6,000 kg/kmol.

The following compounds with general formulas (1) - (4) can be used as the polyoxyalkylene-polysiloxane copolymers.

(1) RₐSi[(OSiMe₂)ₙ(OSiMeG)_{b}OSiMe₂G]₄₋ₐ

(2) RₐSi[(OSiMe₂)ₙ(OSiMeG)_{c}OSiMe₃]₄₋ₐ

(3) GMe₂Si(OSiMe₂)ₙ(OSiMeG)_{b}OSiMe₂G

(4) Me₃Si(OSiMe₂)ₙ(OSiMeG)_{c}OSiMe₃

(in each of the above formulas,
R is a hydrocarbon group having one to ten carbon atoms and lacking aliphatic unsaturation;
Me is the methyl group;
G is a group with the structural formula -D(OR′)ₘA in which D is an alkylene group having one through thirty carbon atoms, R′ is an alkylene group having 2 through 10 carbon atoms, m has a value of at least 1, and A is a terminal group;
a is zero or one;
n has a value of at least one;
b has a value of 1 - 50; and
c has a value of 1 - 50).

Considering the above general formulas (1) - (4) further, concrete examples of R are methyl, ethyl, propyl, isopropyl, butyl, hexyl, decyl, phenyl, tolyl, benzyl, xylyl, methylcyclohexyl, cyclohexyl, cyclopentyl, beta-phenylpropyl, and beta-phenylethyl.

The alkylene group D, which bonds the glycol moiety expressed by G to silicon, is concretely exemplified by methylene, ethylene, propylene, and isopropylene.

R′ in the above structural formula may be any alkylene group having 2 through 10 carbon atoms. Preferred concrete examples of R′ are ethylene, propylene, isopropylene, and butylene.

The subscript m, which specifies the number of OR′ units in the glycol moiety of the molecule, ranges from values as small as about 1 to as large as 1,000 or larger; however, it typically has an average value falling in the range of 10 to 100.

The glycol or polyoxyalkylene unit is terminated or capped by the group A, which is not specifically restricted. Thus, glycol chain-capping units can be the hydroxyl group (A = hydrogen atom), an ether group (A = monovalent hydrocarbon groups such as methyl, butyl, vinyl, or phenyl), or a carboxyl group, the salt or ester of a carboxyl group, a carbonate ester group, or an isocyanate group.

The subscript n specifies the number of dimethylsiloxane units in the molecule, and has a value of at least 1 to 1,500 or larger.

In addition to the preceding, the following copolymers are useful as polyoxyalkylene-polysiloxane copolymers in the present invention.
(1) Copolymers essentially composed of SiO₂ units, (CH₃)₃SiO_{1/2} units, and Q(CH₃)₂SiO_{1/2} units (Q in the formula is a polyoxypropylene polymer or polyoxypropylene/polyoxyethylene copolymer group with a molecular weight in the range of 500 to 6,000 kg/kmol which is bonded to silicon via the Si-C bond) in which the ratio of SiO₂ units to the total of (CH₃)₃SiO_{1/2} units and Q(CH₃)₂SiO_{1/2} units is 1 : 0.4 to 1 : 1.2.
(2) Siloxane copolymers selected from the class of copolymers comprising the reaction products obtained by heating a mixture of siloxane copolymer essentially composed of SiO₂ units and (CH₃)₃SiO_{1/2} units in which the ratio of SiO₂ units to (CH₃)₃SiO_{1/2} units is 1 : 0.4 to 1 : 1.2 and hydroxylated polyoxypropylene polymer or hydroxypolyoxypropylene/polyoxyethylene copolymer with a molecular weight in the range of 500 to 6,000 kg/kmol.

Copolymer (1) is very suitably obtained by the cohydrolysis condensation of a mixture of (CH₃)₃SiCl, H(CH₃)₂SiCl, and SiCl4, followed by coupling this condensate with allyloxy-terminated polyoxyalkylene polymer in the presence of a platinum catalyst.

Copolymer (2) is very suitably obtained by, for example, heating the mixture of the two components under reflux for about 2 hours in the presence of a siloxane condensation catalyst such as potassium hydroxide, tin octoate, etc.

The liquid, water-soluble surfactant (d) is present in the defoaming agent compound as an assistant to the above component (c), and functions to increase the miscibility of the defoaming agent compound with the wax. Concrete examples of this liquid, water-soluble surfactant (d) are liquids with an HLB of at least 9 comprising, for example, polyoxyethylene alkylphenyl ethers, polyoxethylene sorbitan fatty acid esters, polyglycerin fatty acid esters, polyoxyethylene alkyl ethers,
polyoxyethylene castor oil, polyoxyethylene hardened castor oil, etc.

The self-emulsifiable defoaming agent compound (A) can be prepared by simply mixing the components (a) through (c) or (a) through (d) using a suitable mixing means, possibly with additional heating and stirring.

The wax (B) which is blended into the above self-emulsifying defoaming agent compound (A) consists of (i) wax which does not disperse or dissolve in water at room temperature and which has a melting point of at least 35 degrees Centigrade and/or (ii) wax which disperses or dissolves in water at room temperature and which has a melting point of at least 30 degrees Centigrade.

Concrete examples of wax (i) (does not disperse or dissolve in water at room temperature, mp at least 35 degrees Centigrade) are saturated higher fatty acids and their lower oxyalkylene adducts, glycerin saturated higher fatty acid esters, sorbitan saturated higher fatty acid esters, saturated higher fatty acid amides, the alkaline earth metal salts of saturated higher fatty acids, saturated higher alcohols and their lower oxyalkylene adducts, etc.

Wax (i) functions to maintain the complete defoaming agent in the solid state, and, like the component (c) in the self-emulsifiable defoaming agent compound (A), serves at the same time to control the dispersibility or solubility of the defoaming agent in water. As the proportion of wax (i) is increased, the obtained defoaming agent becomes less soluble, with the result that the defoaming agent compound is gradually discharged into water over longer periods of time. However, the concentration of the defoaming agent compound in the water is also reduced at the same time, resulting in a lower defoaming activity. As a result, the upper limit on the proportion of this wax (i) is designated at 60 weight% of the total defoaming agent, vide infra.

Concrete examples of the wax (ii) (disperses or dissolves in water at room temperature, mp at least 30 degrees Centigrade) are high-molecular weight polyalkylene glycols, the polyoxyethylene (alkylene) esters of saturated higher fatty acids, polyoxyethylene (alkylene) higher saturated alcohol ethers, polyoxyethylene sorbitan saturated higher fatty acid esters, polyoxyethylene glycerin saturated fatty acid esters, polyoxyethylene alkylphenyl ethers, polyoxyethylene hardened castor oil, alkyl sulfate alkali metal salts, the alkali metal salts of saturated higher fatty acids, etc.

Wax (ii) functions to maintain the overall defoaming agent in the solid state and at the same time functions as an emulsifying agent and dissolver. It also has the function of directly inducing discharge of the defoaming agent compound into water. Thus, when the proportion of wax (ii) relative to wax (i) is increased, the dissolution rate of the defoaming agent compound is increased and this generates a stronger defoaming activity.

The solid defoaming agent of the present invention is prepared by melting the prescribed quantities of wax (i) and/or wax (ii) comprising wax (B) at temperatures of 40 to 200 degrees Centigrade, combining and mixing this with the self-emulsifying defoaming agent compound (A), pouring the obtained mixture into a mold, solidifying the mixture by cooling, and releasing the product from the mold. The order of addition of the starting materials is not particularly important, and preparation is also possible by mixing the respective components and heating and melting at the same time.

In another method, preparation may be carried out by mixing each component of the self-emulsifying defoaming agent compound individually with the wax (i) and/or wax (ii).

The respective components are blended at 5 to 60 weight% and preferably 10 to 50 weight% self-emulsifying defoaming agent compound (A) and 95 to 40 weight% and preferably 90 to 50 weight% wax (B). When less than 5 weight% self-emulsifiable defoaming agent compound (A) is present, the obtained defoaming agent will have an unsatisfactory defoaming activity. When more than 60 weight% is present, so little wax (B) is present that solidification becomes problematic.

With regard to the composition of wax (B), the ratio between wax (i) and wax (ii) is freely selectable, up to and including the use of only one but not the other. However, the use of both together is preferred because this affords a good balance between the homogeneity of the composition of the solid defoaming agent and the dispersibility or solubility in water. The proportion of wax (i) in the overall defoaming agent is preferably 10 to 60 weight% and in particular does not exceed 50 weight%. When the proportion of wax (i) exceeds 60 weight%, the defoaming agent is poorly water soluble. On the other hand, the proportion of wax (ii) in the overall defoaming agent is preferably at least 10 weight% even when used in combination with wax (i).

In addition to the above self-emulsifiable defoaming agent compound (A) and wax (B), the solid defoaming agent of the present invention can contain those additives, perfumes, colorants, etc., generally used to improve the properties of compositions of this type.

### Examples

The present invention will be explained in the following with reference to illustrative examples, but is not limited by them. Furthermore, parts = weight parts and % = weight%.

### Preparation of defoaming agent compounds

Defoaming agent compounds A to C were prepared by the following methods.

### Compound A

8% Wet-method silica and 2% MQ resin (xylene solution, 75% solids, of siloxane resin consisting of (CH₃)₃SiO₁_{/}₂ units and SiO₄_{/}₂ units in a ratio within the range of 0.4:1 to 1.2:1) were added to 90% dimethylpolysiloxane having a viscosity of 1,000 mm²/s at 25 degrees Centigrade, and this was dispersed to homogeneity and then heated to 180 to 200 degrees Centigrade to afford a defoaming agent compound A.

### Compound B

15% Silicone oil compound (prepared by heating 95% dimethylpolysiloxane having a viscosity of 350 mm²/s at 25 degrees Centigrade plus 5% wet-method silica plus trace add catalyst) was stirred into 85% water-soluble polyoxyalkylene-polysiloxane copolymer (commercial product) having a viscosity at 25 degrees Centigrade of 1,200 mm²/s and a cloud point of 38 degrees Centigrade to afford a defoaming agent compound B.

This defoaming agent compound B was easily dispersed in water with stirring (self-emulsification) to produce a milky-white emulsion.

### Compound C

A homogeneous dispersion was prepared from 10% of the polyoxyalkylene-polysiloxane copolymer obtained by reacting MQ resin and polyoxyethylene/polyoxypropylene (MW 6,000 kg/kmol), 5% polyoxyethylene alkylphenyl ether (Triton X100 from Rohm & Haas Company) and 45% polypropylene glycol (MW = 2,000 kg/kmol). 40% Compound A, supra, was added to this dispersion with stirring to homogeneity to afford a self-emulsifying compound C.

Compound C was easily dispersed by stirring in water (self-emulsification) to afford a milky-white emulsion.

### Preparation and testing of the defoaming agents

Solid defoaming agents 1 through 7 were prepared by the following production method using the recipes given in Table 1, and the homogeneity of the composition, dispersibility in water, and defoaming activity of each were tested by the methods given below.

### Preparation of the solid defoaming agents

Solid defoaming agents were prepared by melting the water-insoluble wax (i) and the water-soluble wax (ii) at 80 to 100 degrees Centigrade and adding the defoaming agent compound with mixing to homogeneity in a propeller stirrer. This was then poured into a mold and allowed to solidify under spontaneous cooling. The defoaming agent compounds and waxes used were as follows.

### Defoaming agent 1

defoaming agent compound = compound B
wax (i) = stearyl monoglyceride (mp = 68 degrees Centigrade)
wax (ii) = polyoxyalkylene (mp = 50 degrees Centigrade) of 80% polyoxyethylene/20% polyoxypropylene (MW = 10,000 kg/kmol)

### Defoaming agent 2

The recipe for defoaming agent 1 was followed, but using compound C as the defoaming agent compound.

### Defoaming agent 3

Stearyl diethanolamide was additionally blended in the recipe of defoaming agent 2.

### Defoaming agent 4

The recipe of defoaming agent 3 was followed, but using polyoxyethylene (30) octylphenyl ether (mp = 35 degrees Centigrade) as wax (ii).

### Defoaming agent 5

The recipe of defoaming agent 3 was followed, but wax (ii) was omitted.

### Defoaming agent 6 (Comparison Example)

Compound A was used as the defoaming agent compound in the recipe of defoaming agent 3.

### Defoaming agent 7 (Comparison Example)

The proportion of wax (i) was raised to 70% in the recipe of defoaming agent 2.

### Test methods

Composition homogeneity: The surface of the solid defoaming agent was inspected visually in order to evaluate the status of the dispersion of the defoaming agent compound and the presence/absence of oil fraction bleed onto the surface. The following scale was used for evaluation.
- ++: homogeneous, no bleed
- +: slight bleed
- x: nonuniform, bleed
Dispersibility in water: 1 g of the solid defoaming agent was dissolved in 200 g water in a glass bottle by standing for 60 minutes. After the elapse of the 60 minutes, the undissolved fraction was removed, and the dissolved fraction was manually shaken for two minutes and the status of the dispersion was then inspected.
- ++: homogeneous dispersion
- +: partial aggregation
- x: aggregation
- -: dispersion impossible
Foaming: 1 g of the solid defoaming agent (1 square cm) was placed in a glass bottle containing 100 g of a 1% aqueous solution of polyoxyethylene (2) sorbitan monooleate ester, and this was allowed to stand for 60 minute. After then removing the undissolved fraction, the mixture was shaken in a Barrell wrist-action shaker for 10 seconds. The time from immediately after the cessation of shaking until the disappearance of the foam was measured. The same sample was then additionally shaken for another 40, 60, 120, 180 seconds, and 180 seconds, and the defoaming times were similarly measured.

These results are reported in Table 2.

As the results in Table 2 make clear, because the solid silicone defoaming agent of the present invention is prepared by dispering a specific self-emulsifiable defoaming agent compound with non-water-dispersible or non-water-soluble wax (i) and/or water-dispersible or water-soluble wax (ii) and cooling this for solidification, the defoaming agent compound is easily and stably dispersed in the wax to afford a homogeneous composition. Furthermore, the solid silicone defoaming agent is easy to prepare and has an excellent defoaming activity. In particular, when waxes (i) and (ii) are used in combination as the wax, an excellent dispersibility in water is evidenced.

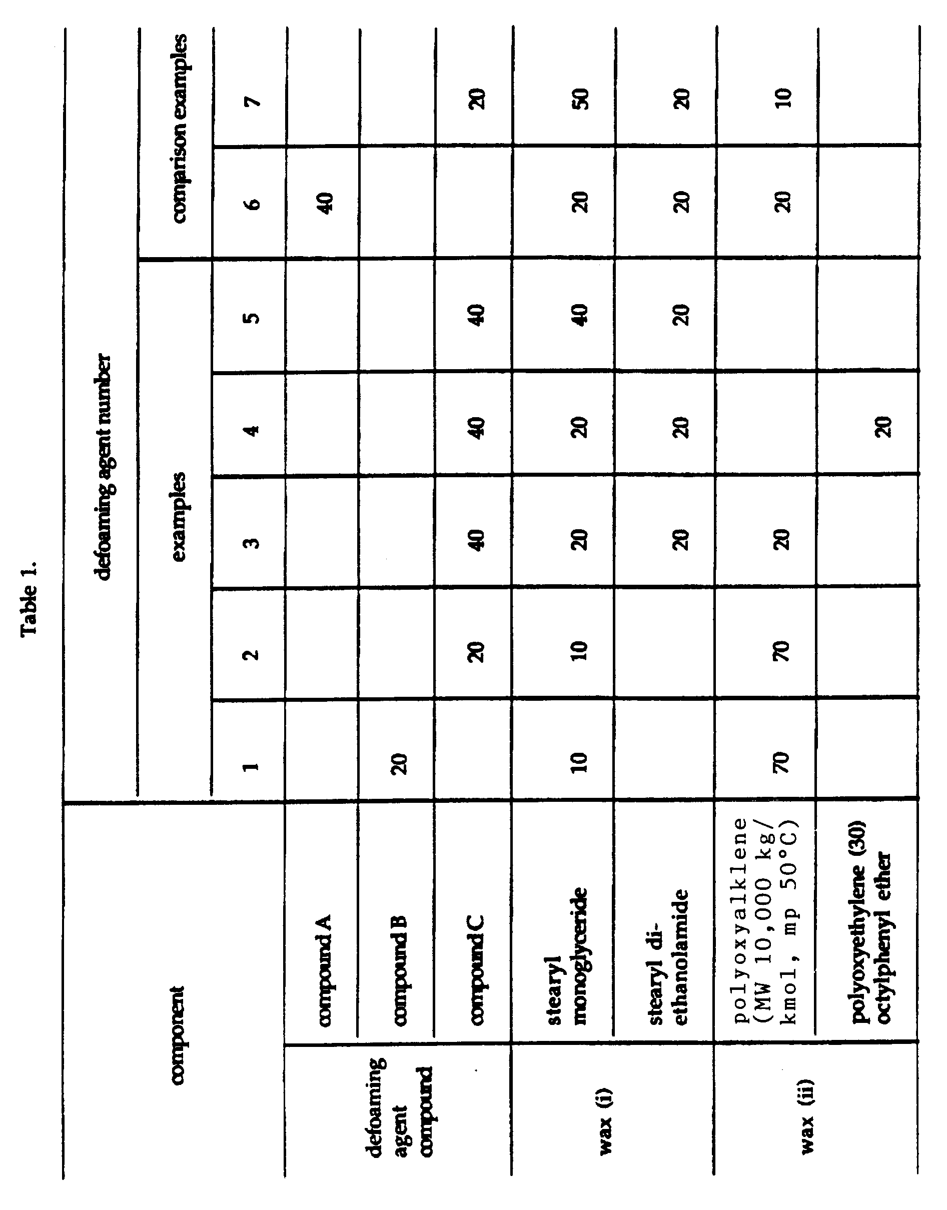

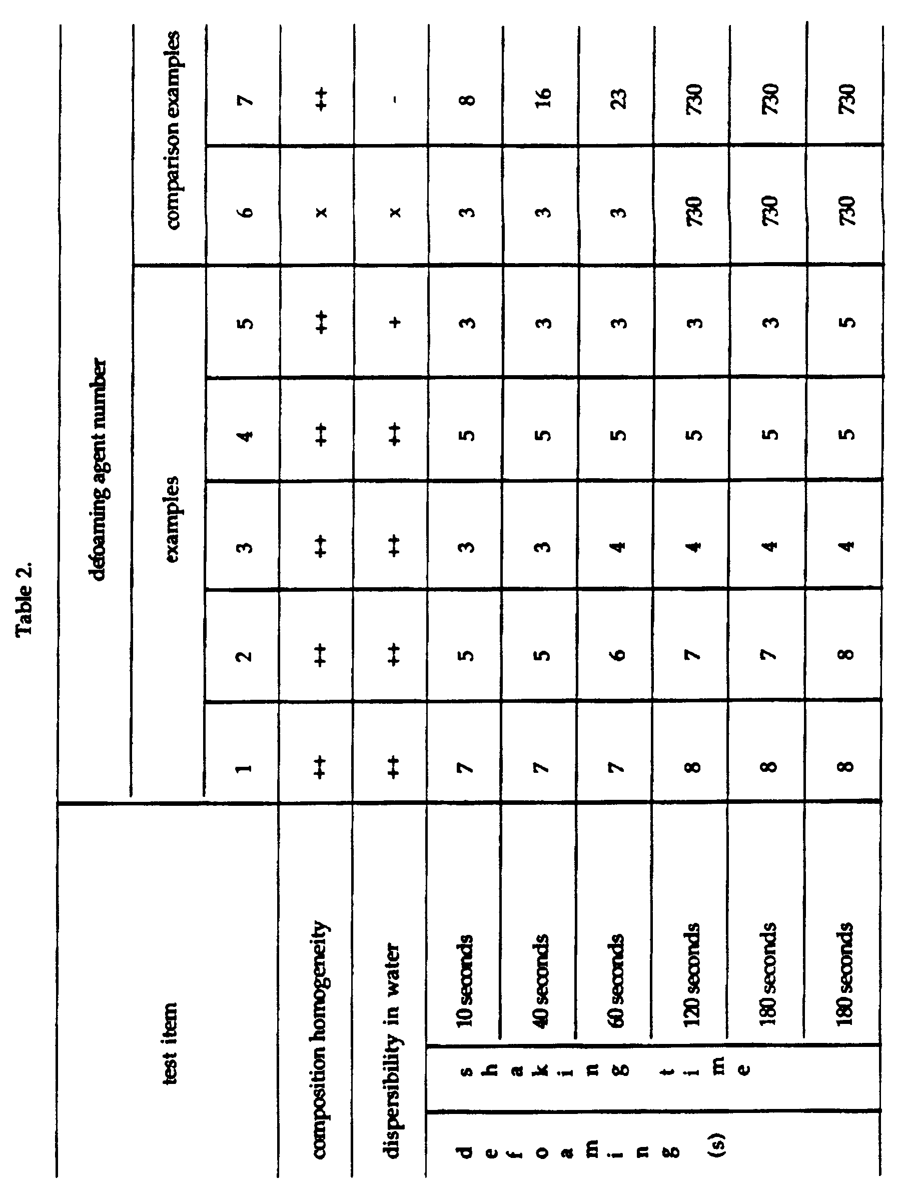

## Claims

1. Solid silicone defoaming agent characteristically comprising
(A) 5 to 60 weight parts self-emulsifying defoaming agent compound and
(B) 95 to 40 weight parts wax;
wherein said self-emulsifying defoaming agent compound (A) consists of
at least 5 weight% silicone oil compound comprising (a) silicone oil having a viscosity of at least 20 mm²/s at 25 degrees Centigrade and (b) microparticulate silica,
(c) at least 30 weight% polyoxypropylene or polyoxypropylene/polyoxyethylene glycols having a molecular weight of 500 to 6000 kg/kmol and/or polyoxyalkylene/polysiloxane copolymer, and
(d) zero to 30 weight% optionally added liquid, water-soluble surfactant other than said (c);
wherein said wax (B) consists of
(i) wax which does not disperse or dissolve in water at room temperature and which has a melting point of at least 35 degrees Centigrade,
and/or
(ii) wax which dissolves or disperses in water at room temperature and which has a melting point of at least 30 degrees Centigrade;
and wherein the wax (i) comprises no more than 60 weight% of the overall defoaming agent.

## Patentansprüche

1. Festes Silikonentschäumungsmittel, gekennzeichnet dadurch, daß es
(A) 5 bis 60 Gew.-Teile einer selbstemulgierenden entschäumenden Verbindung und
(B) 95 bis 40 Gew.-Teile Wachs
umfaßt,
wobei die selbstemulgierende entschäumende Verbindung (A) aus mindestens 5 Gew.-% einer Silikonölverbindung umfassend
(a) ein Silikonöl mit einer Viskosität von mindestens 20 mm²/s bei 25°C und
(b) mikroteilchenförmiges Siliciumdioxid,
(c) mindestens 30 Gew.-% Polyoxypropylen- oder Polyoxypropylen-Polyoxyethylen Glykole mit einem Molekulargewicht von 500 bis 6000 kg pro kmol und/oder ein Polyoxyalkylen-Polysiloxan-Copolymer und
(d) 0 bis 30 Gew.-% eines gegebenenfalls zugesetzten anderen flüssigen wasserlöslichen Tensids außer (c);
besteht,
wobei das Wachs (B) aus
(i) einem Wachs, das in Wasser mit Raumtemperatur nicht dispergiert wird oder gelöst wird und einen Schmelzpunkt von mindestens 35°C hat
und/oder
(ii) einem Wachs, das in Wasser mit Raumtemperatur gelöst oder dispergiert wird und einen Schmelzpunkt von mindestens 30°C hat,
besteht,
und wobei das Wachs (i) nicht mehr als 60 Gew.-% des gesamten entschäumenden Mittels ausmacht.

## Revendications

1. Agent de démoussage silicone solide caractérisé en ce qu'il comprend
(A) 5 à 60 parties en poids d'une composition d'agent de démoussage auto-émulsifiante, et
(B) 95 à 40 parties en poids de cire;
dans lequel ladite composition d'agent de démoussage autoémulsifiante (A )consiste en au moins 5% en poids d'une composition à base d'huile de silicone comprenant(a)une huile de silicone ayant une viscosité d'au moins 20mm²/s à 25°C et (b )des microparticules de silice,
(c)au moins 30% en poids de polyoxypropylène ou polyoxypropylène/polyoxyéthylène glycols ayant un poids moléculaire de 500 à 6000 kg/kmol et/ou de copolymère polyoxyalkylène/polysiloxane, et
(d) facultativement 0 à 30% en poids d'un agent tensio-actif hydrosoluble liquide autre que ledit ingrédient (c) ;
dans lequel ladite cire (B) consiste en
(i) une cire qui ne se disperse ou ne se dissout pas dans l'eau à la température ambiante et qui a un point de fusion d'au moins 35°C,
et/ou
(ii) une cire qui se dissout ou se disperse dans l'eau à la température ambiante et qui a un point de fusion d'au moins 30°C ;
et dans lequel la cire (i) ne constitue pas plus de 60% en poids de la totalité de l'agent de démoussage.
